# FASCICULE DE BREVET EUROPEEN

(11) **EP 3 887 220 B1**
(45) Date de publication et mention de la délivrance du brevet: **15.05.2024**
(21) Numéro de dépôt: 19823789.3
(22) Date de dépôt: 09.10.2019
(51) Int. Cl.: B60W 30/18, B60W 10/188, B60W 10/08, B60K 6/52

(54) **PROCÉDÉ ET DISPOSITIF DE CONTRÔLE DE DÉCÉLÉRATION À PHASE MIXTE, POUR UN VÉHICULE À CONDUITE AUTOMATISÉE ET MACHINE MOTRICE NON-THERMIQUE**
VERFAHREN UND VORRICHTUNG ZUR STEUERUNG DER VERZÖGERUNG IN EINER HYBRIDPHASE, FÜR EIN SELBSTFAHRENDES FAHRZEUG UND EIN VERBRENNUNGSLOSES ANTRIEBSAGGREGAT
METHOD AND DEVICE FOR CONTROLLING DECELERATION IN A HYBRID PHASE, FOR A SELF-DRIVING VEHICLE AND NON-COMBUSTION POWER UNIT

(30) Priorité: 28.11.2018 FR 1871983
(43) Date de publication de la demande: 06.10.2021
(73) Titulaire: Stellantis Auto SAS, 78300 Poissy (FR)
(72) Inventeur: CIARLA, Valentina, 92400 COURBEVOIE (FR); BLANCHET, Alexandre, 78124 MONTAINVILLE (FR); MAUDEMAIN, Aurelien, 91290 LA NORVILLE (FR)
(86) Numéro de dépôt international: PCT/FR2019/052385
(87) Numéro de publication internationale: WO 2020/109679

(56) Documents cités:
- WO-A1-2015/198119
- DE-A1-102008 051 001
- US-A1- 2012 056 470
- US-A1- 2015 321 564

## Description

### Domaine technique de l'invention

L'invention concerne les véhicules à conduite au moins partiellement automatisée (ou autonome) et comprenant un groupe motopropulseur comportant au moins une machine motrice non-thermique.

Dans ce qui suit on considère qu'un véhicule est à conduite au moins partiellement automatisée (ou autonome) lorsqu'il peut être conduit de façon automatisée (partielle ou totale (sans intervention de son conducteur)) pendant une phase de conduite automatisée, ou de façon manuelle (et donc avec intervention de son conducteur sur le volant et/ou les pédales) pendant une phase de conduite manuelle.

### Etat de la technique

Certains véhicules comprennent un groupe motopropulseur (ou GMP) comportant au moins une machine motrice (ou génératrice) non-thermique, c'est-à-dire agencée de manière à produire du couple pour leur déplacement à partir de l'énergie stockée dans un moyen de stockage d'énergie et à récupérer de l'énergie (ou du couple) pour alimenter en énergie ce moyen de stockage d'énergie, par exemple pendant une phase de décélération par récupération d'énergie. Une telle machine motrice non-thermique peut, par exemple, être une machine (ou un moteur) électrique, une machine hydraulique, une machine pneumatique (ou à air comprimé), ou un volant d'inertie. On notera que les GMPs concernés par l'invention peuvent comprendre soit une unique machine motrice non-thermique, soit au moins deux machines motrices non-thermiques, soit encore au moins un moteur thermique et au moins une machine motrice non-thermique (GMP hybride).

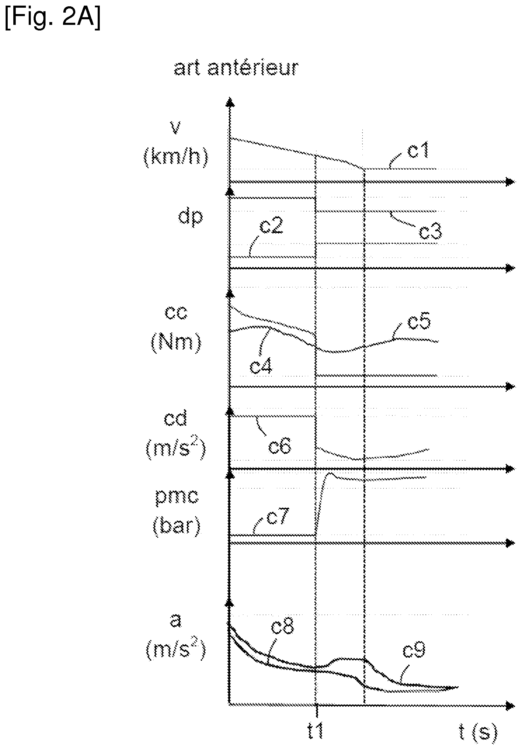

Actuellement, lorsque qu'il y a un besoin de ralentir (ou décélérer) un véhicule du type précité, le calculateur qui contrôle (au moins partiellement) sa conduite dans une phase de conduite automatisée, commence par contrôler son freinage (ou sa décélération) en exploitant le couple négatif qui est mis à disposition par son GMP et ensuite contrôle son freinage (ou sa décélération) au moyen de son système de freinage (généralement de type hydraulique). Cette stratégie de l'art antérieur est illustrée sur le diagramme multiple de la figure 2A. Plus précisément, ce diagramme multiple comprend des exemples de courbes d'évolution temporelle (t en (secondes)) des paramètres suivants (en allant du haut vers le bas) :
- la vitesse v du véhicule en km/h (courbe c1),
- l'état de la demande de pilotage dp du GMP (courbe c2) ou du système de freinage (courbe c3), avec un état haut signifiant « oui » (ou « vrai ») et un état bas signifiant « non » (ou « faux »),
- la consigne de couple cc (en Nm) transmise au GMP (courbe c4) et le couple minimum autorisé (courbe c5),
- la consigne de décélération cd (en m/s²) transmise au système de freinage (courbe c6),
- la pression pm (en bar) du maître cylindre du système de freinage (courbe c7),
- la consigne de décélération totale du véhicule a (en m/s²) générée (courbe c8) et la décélération effective (ou réelle) du véhicule a (en m/s²) (courbe c9).

Comme on peut l'observer sur la figure 2A, le calculateur contrôlant la conduite automatisée exploite le couple minimum autorisé du GMP c5 jusqu'à un instant t1, puis transmet au système de freinage une consigne de décélération c6. Or, cette dernière (c6) ne prend pas en compte la durée qui est nécessaire pour que le système de freinage induise effectivement une décélération du véhicule. Cette durée a deux composantes : une première durée nécessaire à la répartition de la consigne de décélération totale c8 entre le système de freinage et le freinage par récupération d'énergie (ou régénératif) si le GMP annonce un potentiel de récupération d'énergie disponible, et une seconde durée nécessaire à la prédisposition des pompes hydrauliques du système de freinage.

Si la dynamique de contrôle du calculateur contrôlant la conduite automatisée est trop rapide par rapport à la seconde durée, on peut avoir deux effets de bord :
- la répartition dans le système de freinage ne s'effectue pas correctement, ce qui provoque une discontinuité dans la décélération globale du véhicule (dans le pire cas (comme par exemple lorsque le véhicule commence une descente) cela peut engendrer une accélération du véhicule au lieu d'une décélération),
- le système de freinage ne peut pas anticiper l'activation de ses pompes hydrauliques lors d'un freinage récupératif en cours, et l'intégralité de la consigne de pression hydraulique est envoyée avec une dynamique très rapide, ce qui peut induire du bruit lors de l'activation des pompes hydrauliques. Cela constitue un désagrément acoustique (voire l'inquiétude des passagers), qui est maximal(e) lorsque le véhicule est dans une phase de roulage tout électrique.

L'invention a donc notamment pour but d'améliorer la situation. Document US2015/321564A1 divulgue un procédé de contrôle de décélération.

### Présentation de l'invention

Elle propose notamment à cet effet un procédé de contrôle de décélération destiné à être mis en oeuvre dans un véhicule à conduite au moins partiellement automatisée et comprenant :
- une machine motrice non-thermique fournissant du couple pour au moins un train du véhicule à partir d'une énergie stockée dans un moyen de stockage d'énergie ou induisant une décélération du véhicule par récupération d'énergie sur le train pour alimenter en énergie le moyen de stockage d'énergie, en fonction d'une consigne de couple, et
- un système de freinage décélérant le véhicule en fonction d'une consigne de décélération.

Ce procédé de contrôle de décélération se caractérise par le fait qu'il comprend une étape dans laquelle, en cas de besoin d'une décélération pendant une phase de conduite automatisée, on détermine la consigne de couple en fonction d'un couple minimal autorisé et d'au moins une contrainte jusqu'à ce que ce couple minimal autorisé soit effectivement atteint, et on détermine la consigne de décélération en fonction de la/chaque contrainte et à partir d'un premier instant choisi précédant un second instant où ce couple minimal autorisé est effectivement atteint, de sorte que la décélération résulte de ladite récupération d'énergie jusqu'au premier instant, de ladite récupération d'énergie et dudit système de freinage entre lesdits premier et second instants, et par le seul système de freinage après le second instant.

Grâce à l'invention on a désormais trois phases au lieu de deux, à savoir une première phase jusqu'au premier instant dans laquelle le freinage est purement récupératif (avec le GMP), une deuxième phase (mixte) dans laquelle le freinage est à la fois récupératif et hydraulique (avec le système de freinage), et une troisième phase dans laquelle le freinage est purement hydraulique, ce qui permet d'éviter les discontinuités dans le freinage et/ou les bruits d'activation des pompes hydrauliques.

Le procédé de contrôle de décélération selon l'invention peut comporter d'autres caractéristiques qui peuvent être prises séparément ou en combinaison, et notamment :
- dans son étape on peut déterminer entre les premier et second instants une consigne de couple qui est inférieure ou égale à chaque consigne de couple déterminée avant le premier instant ;
   > dans son étape on peut déterminer entre les premier et second instants des consignes de décélération qui croissent successivement (sauf en cas d'intervention du conducteur) ;
- dans son étape on peut choisir le premier instant en fonction d'un pourcentage d'utilisation du couple par rapport au couple minimal autorisé. En variante, dans son étape on peut choisir le premier instant en fonction du second instant, l'écart entre les premier et second instants étant prédéfini ;
- les contraintes peuvent être choisies parmi une volonté de décélérer d'un conducteur du véhicule, une distance en cours séparant le véhicule d'un autre véhicule précédant ce dernier, une vitesse relative en cours du véhicule par rapport à un autre véhicule précédant ce dernier, la présence d'un obstacle détecté sur une portion de route sur laquelle circule le véhicule, et une consigne de vitesse sélectionnée par le conducteur et définissant la vitesse à laquelle le conducteur veut que le véhicule circule.

L'invention propose également un produit programme d'ordinateur comprenant un jeu d'instructions qui, lorsqu'il est exécuté par des moyens de traitement, est propre à mettre en oeuvre un procédé de contrôle de décélération du type de celui présenté ci-avant pour contrôler la décélération d'un véhicule à conduite au moins partiellement automatisée et comprenant, d'une part, une machine motrice non-thermique fournissant du couple pour au moins un train du véhicule à partir d'une énergie stockée dans un moyen de stockage d'énergie ou induisant une décélération du véhicule par récupération d'énergie sur le train pour alimenter en énergie le moyen de stockage d'énergie, en fonction d'une consigne de couple, et, d'autre part, un système de freinage décélérant le véhicule en fonction d'une consigne de décélération.

L'invention propose également un dispositif de contrôle, d'une part, destiné à équiper un véhicule à conduite au moins partiellement automatisée et comprenant une machine motrice non-thermique fournissant du couple pour au moins un train du véhicule à partir d'une énergie stockée dans un moyen de stockage d'énergie ou induisant une décélération du véhicule par récupération d'énergie sur le train pour alimenter en énergie ce moyen de stockage d'énergie, en fonction d'une consigne de couple, et un système de freinage décélérant le véhicule en fonction d'une consigne de décélération, et, d'autre part, comprenant au moins un calculateur déterminant les consigne de couple et consigne de décélération en fonction de contraintes dans une phase de conduite automatisée.

Ce dispositif de contrôle se caractérise par le fait qu'en cas de besoin d'une décélération pendant une phase de conduite automatisée, son calculateur détermine la consigne de couple en fonction d'un couple minimal autorisé jusqu'à ce que ce couple minimal autorisé soit effectivement atteint, et détermine la consigne de décélération à partir d'un premier instant choisi précédant un second instant où ce couple minimal autorisé est effectivement atteint, de sorte que la décélération résulte de ladite récupération d'énergie jusqu'au premier instant, de ladite récupération d'énergie et dudit système de freinage entre lesdits premier et second instants, et par le seul système de freinage après le second instant.

L'invention propose également un véhicule, éventuellement de type automobile, à conduite au moins partiellement automatisée, et comprenant :
- une machine motrice non-thermique fournissant du couple pour au moins un train du véhicule à partir d'une énergie stockée dans un moyen de stockage d'énergie ou induisant une décélération du véhicule par récupération d'énergie sur le train pour alimenter en énergie le moyen de stockage d'énergie, en fonction d'une consigne de couple,
- un système de freinage décélérant le véhicule en fonction d'une consigne de décélération, et
- un dispositif de contrôle du type de celui présenté ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un véhicule comprenant un exemple de chaîne de transmission hybride, un calculateur de supervision, un calculateur de conduite automatisée, et un exemple de dispositif de contrôle selon l'invention,
[Fig. 2A] illustre schématiquement, au sein d'un diagramme multiple, des exemples de courbes d'évolution temporelle (t) de paramètres d'un véhicule impliqués dans une stratégie de décélération en phase de conduite automatisée de l'art antérieur,
[Fig. 2B] illustre schématiquement, au sein d'un diagramme multiple, des exemples de courbes d'évolution temporelle (t) de paramètres d'un véhicule impliqués dans une stratégie de décélération en phase de conduite automatisée réalisée grâce à un procédé de contrôle de décélération selon l'invention, et
[Fig. 3] illustre schématiquement un exemple d'algorithme mettant en oeuvre un procédé de contrôle de décélération selon l'invention.

### Description détaillée de l'invention

L'invention a notamment pour but de proposer un procédé de contrôle de décélération, et un dispositif de contrôle DC associé, destinés à être mis en oeuvre dans un véhicule V à conduite au moins partiellement automatisée et à récupération de l'énergie de freinage.

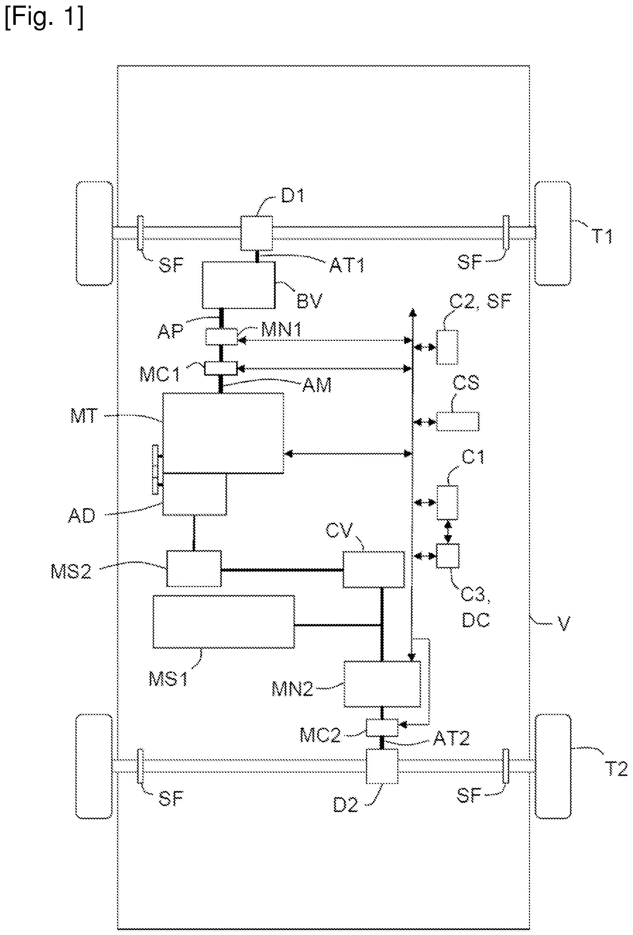

Dans ce qui suit, on considère, à titre d'exemple non limitatif, que le véhicule V est de type automobile. Il s'agit par exemple d'une voiture, comme illustré sur la figure 1. Mais l'invention n'est pas limitée à ce type de véhicule. Elle concerne en effet tout type de véhicule terrestre à conduite au moins partiellement automatisée et comprenant un groupe motopropulseur (ou GMP) comportant au moins une machine motrice non-thermique couplée à un premier train et chargée de produire du couple pour les déplacements et de récupérer de l'énergie (ou du couple).

Il est rappelé que l'on entend ici par « véhicule à conduite au moins partiellement automatisée (ou autonome) » un véhicule pouvant être conduit de façon automatisée (partielle ou totale (sans intervention de son conducteur)) pendant une phase de conduite automatisée par au moins un calculateur de conduite automatisée C1, ou de façon manuelle (et donc avec intervention de son conducteur sur le volant et/ou les pédales) pendant une phase de conduite manuelle.

Il est également rappelé que l'on entend ici par « machine motrice non-thermique » une machine produisant du couple pour les déplacements de son véhicule à partir de l'énergie stockée dans un moyen de stockage d'énergie et récupérant de l'énergie (ou du couple) pour alimenter en énergie ce moyen de stockage d'énergie, par exemple pendant une phase de décélération par récupération d'énergie. Une telle machine motrice non-thermique peut, par exemple, être une machine (ou un moteur) électrique, une machine hydraulique, une machine pneumatique (ou à air comprimé), ou un volant d'inertie.

On considère dans ce qui suit, à titre d'exemple non limitatif, que la/chaque machine motrice non-thermique du GMP est de type électrique.

Il est également rappelé que les GMPs concernés par l'invention peuvent comprendre soit une unique machine motrice non-thermique, soit au moins deux machines motrices non-thermiques, soit encore au moins un moteur thermique et au moins une machine motrice non-thermique (GMP hybride). On entend ici par « moteur thermique » un moteur consommant du carburant ou des produits chimiques. Par conséquent, il pourra notamment s'agir d'un réacteur, d'un turboréacteur ou d'un moteur chimique.

On a schématiquement représenté sur la figure 1 un véhicule V comprenant une chaîne de transmission à GMP hybride, un calculateur de supervision CS propre à superviser (ou gérer) le fonctionnement de la chaîne de transmission, un calculateur de conduite automatisée C1, un système de freinage SF, et un dispositif de contrôle DC selon l'invention.

Le système de freinage SF est agencé de manière à mettre en oeuvre une stratégie de contrôle du freinage du véhicule V, notamment en cas de détection d'une perte d'adhérence (dérapage ou patinage) de l'une de ses roues motrices. Il peut donc être de type ESC (« Electronic Stability Control ») ou ESP (« Electronic Stability Program ») lorsqu'il met en oeuvre une stratégie d'anti-dérapage, ou bien ASR (« Acceleration Slip Regulation ») ou TCS (« Traction Control System ») lorsqu'il met en oeuvre une stratégie d'anti-patinage.

Le GMP comprend ici, notamment, un moteur thermique MT, des premiers moyens de couplage MC1, des moyens de changement de rapport BV, une première machine motrice non-thermique MN1, des seconds moyens de couplage MC2, une seconde machine motrice non-thermique MN2, et un premier moyen de stockage d'énergie MS1.

La chaîne de transmission comprend notamment, en complément de son GMP, un arbre moteur AM, et des premier AT1 et second AT2 arbres de transmission.

Etant donné que l'on considère ici que la/chaque machine motrice non-thermique MN1, MN2 est de type électrique, le premier moyen de stockage d'énergie MS1 qui l'alimente est agencé pour stocker de l'énergie électrique, par exemple en basse tension (typiquement 220 V ou 400 V ou encore 600 V).

Le moteur thermique MT (optionnel) comprend un vilebrequin (non représenté) qui est solidarisé fixement à l'arbre moteur AM afin d'entraîner ce dernier (AM) en rotation. Ce moteur thermique MT est destiné à fournir du couple pour un premier train T1 de roues, via les premiers moyens de couplage MC1 et les moyens de changement de rapport BV.

Par exemple, le premier train T1 est situé à l'avant du véhicule V, et de préférence, et comme illustré, couplé au premier arbre de transmission AT1 via un premier différentiel (ici avant) D1. Mais dans une variante ce premier train T1 pourrait être situé à l'arrière du véhicule V.

Les premiers moyens de couplage MC1 peuvent, par exemple, être agencés sous la forme d'un embrayage. Mais il pourrait également s'agir d'un convertisseur de couple ou d'un crabot.

Les moyens de changement de rapport BV peuvent, par exemple, être agencés sous la forme d'une boîte de vitesses. Ils comprennent un arbre primaire (ou d'entrée) AP destiné à recevoir du couple, et un arbre secondaire (ou de sortie) destiné à recevoir ce couple via l'arbre primaire AP afin de le communiquer au premier arbre de transmission AT1 auquel il est couplé et qui est couplé indirectement à des roues (ici avant) du véhicule V via le premier différentiel D1. Mais dans une variante de réalisation les moyens de changement de rapport BV pourraient, par exemple, comprendre au moins un train épicycloïdal comprenant un, deux ou trois synchronisateurs.

On notera que les moyens de changement de rapport BV sont automatisés du fait que le véhicule V est à conduite au moins partiellement automatisée.

La première machine motrice non-thermique MN1 est ici intercalée entre les premiers moyens de couplage MC1 et les moyens de changement de rapport BV, à titre d'exemple purement illustratif. Elle est donc ici couplée au premier train T1, comme le moteur thermique MT (optionnel).

Les seconds moyens de couplage MC2 (optionnels) sont ici chargés de coupler/ découpler la seconde machine motrice non-thermique MN2 au/du second arbre de transmission AT2, sur ordre du calculateur de supervision CS.

La seconde machine motrice non-thermique MN2 (optionnelle) est ici, à titre d'exemple non limitatif, chargée de produire du couple à partir de l'énergie stockée dans le premier moyen de stockage d'énergie MS1 pour le second train T2 de roues, lorsqu'elle est couplée à ce dernier (T2) via les seconds moyens de couplage MC2. On notera que cette seconde machine MN2 pourrait ne pas être motrice, mais seulement chargée de récupérer de l'énergie de freinage, ou bien pourrait être motrice et chargée de récupérer de l'énergie de freinage.

Par exemple, le second train T2 est situé à l'arrière du véhicule V, et couplé au second arbre de transmission AT2, de préférence, et comme illustré, via un second différentiel (ici arrière) D2. Mais dans la variante précitée ce second train T2 pourrait être situé à l'avant du véhicule V.

Les seconds moyens de couplage MC2 peuvent, par exemple, être un mécanisme à crabots ou un embrayage ou encore un convertisseur de couple hydraulique. Ils peuvent prendre au moins deux états de couplage : un premier (couplé) dans lequel ils assurent le couplage de la seconde machine motrice non-thermique MN2 au second arbre de transmission AT2, et un second (découplé) dans lequel ils découplent la seconde machine motrice non-thermique MN2 du second arbre de transmission AT2.

On notera également, comme illustré non limitativement sur la figure 1, que la chaîne de transmission comprend ici un démarreur ou un alternodémarreur AD couplé au moteur thermique MT et chargé de lancer ce dernier (MT) afin de lui permettre de démarrer. Ce lancement se fait grâce à de l'énergie électrique qui est, par exemple et comme illustré non limitativement, stockée dans des seconds moyens de stockage MS2.

Ces seconds moyens de stockage MS2 peuvent être agencés sous la forme d'une batterie très basse tension (par exemple 12 V, 24 V ou 48V). Cette dernière (MS2) peut, par exemple, alimenter un réseau de bord auquel sont connectés des équipements électriques du véhicule V. On notera que les seconds moyens de stockage MS2 peuvent, comme illustré non limitativement, être couplés aux premiers moyens de stockage d'énergie MS1 et aux première MN1 et seconde MN2 machines motrices non-thermiques via un convertisseur CV de type DC/DC, afin de pouvoir être rechargés.

Les fonctionnements du moteur thermique MT (optionnel), de la première machine motrice non-thermique MN1, de la seconde machine motrice non-thermique MN2 (optionnelle), des premiers moyens de couplage MC1, des seconds moyens de couplage MC2 (optionnels), et des moyens de changement de rapport BV, peuvent être contrôlés par le calculateur de supervision CS.

Le calculateur de conduite automatisée C1 est chargé de contrôler la conduite (au moins partielle) du véhicule V pendant une phase de conduite automatisée (ou autonome). Il communique de façon permanente avec le calculateur de supervision CS. Par ailleurs, il est éventuellement de type ADAS (« Advanced Driver Assistance System »).

Lorsque le calculateur de conduite automatisée C1 décide de décélérer son véhicule V, il commence par identifier une accélération cible pour le véhicule V en fonction de contraintes externes (comme par exemple la distance en cours séparant le véhicule V d'un autre véhicule précédant ce dernier (V), la vitesse relative en cours du véhicule V par rapport à un autre véhicule précédant ce dernier (V), la présence d'un obstacle détecté sur la portion de route sur laquelle circule le véhicule V, ou une consigne de vitesse sélectionnée par le conducteur et définissant la vitesse à laquelle le conducteur veut que le véhicule V circule). Ensuite, le calculateur de conduite automatisée C1 répartit cette accélération en une consigne de couple pour le GMP et une consigne de décélération pour le système de freinage SF (et plus précisément pour son calculateur de freinage C2).

Pour réaliser cette répartition, le calculateur de conduite automatisée C1 doit considérer les capacités de réalisation du couple par le GMP à l'instant considéré (à savoir le couple minimal autorisé et le couple maximal autorisé par le GMP).

La consigne de décélération transmise au calculateur de freinage C2 est coordonnée avec l'éventuel freinage demandé par le conducteur à l'instant considéré par un appui sur la pédale de frein. La décélération peut être réalisée soit par le freinage hydraulique assuré par le système de freinage SF, soit par du freinage régénératif par la première machine motrice non-thermique MN1 (ainsi qu'éventuellement ici la seconde machine motrice non-thermique MN2). Le freinage régénératif est rendu possible lorsque le GMP informe le calculateur de freinage C2 du potentiel de récupération d'énergie disponible via au moins la première machine motrice non-thermique MN1. Ensuite, en fonction du couple (égal à ce potentiel de récupération d'énergie), on peut demander au GMP de réaliser une partie de la décélération en couple négatif au moyen d'au moins la première machine motrice non-thermique MN1.

Comme indiqué précédemment, l'invention propose un procédé de contrôle destiné à être mis en oeuvre dans le véhicule V pour contrôler la décélération lorsque se présente un besoin de décélération pendant une phase de conduite automatisée.

Ce procédé (de contrôle) peut être au moins partiellement mis en oeuvre par le dispositif de contrôle DC qui comprend à cet effet au moins un calculateur de contrôle C3. Ce dernier (C3) peut, par exemple, comprendre au moins un processeur de signal numérique (ou DSP (« Digital Signal Processor »)), éventuellement associé à au moins une mémoire.

Dans l'exemple illustré non limitativement sur la figure 1, le calculateur de contrôle C3 est indépendant du calculateur de supervision CS et du calculateur de conduite automatisée C1, tout en étant couplé à ces derniers (CS et C1) afin d'échanger des messages avec eux. Mais dans des variantes de réalisation il (C3) pourrait faire partie du calculateur de supervision CS ou bien du calculateur de conduite automatisée C1.

Le procédé d'assistance, selon l'invention, comprend une étape 10-50 qui est mise en oeuvre chaque fois que se présente un besoin de décélération pendant une phase de conduite automatisée du véhicule V. Ce besoin peut résulter d'une analyse des contraintes du véhicule V effectuée par le calculateur de conduite automatisée C1 ou de la volonté du conducteur du véhicule V de décélérer ce dernier (V), par exemple via une action sur une interface homme/machine du véhicule V.

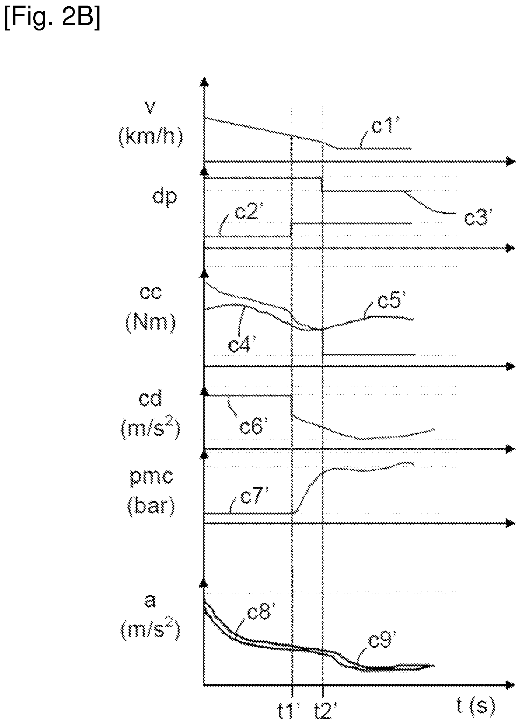

L'étape 10-50 du procédé est décrite ci-après en référence au diagramme multiple d'exemples de courbes d'évolution temporelle (t) de paramètres du véhicule impliqués dans la stratégie de décélération pendant une phase de conduite automatisée, illustré sur la figure 2B. Ce diagramme multiple est similaire à celui illustré sur la figure 2A voisine, et donc concerne les paramètres suivants (en allant du haut vers le bas) :
- la vitesse v du véhicule en km/h (courbe c1'),
- l'état de la demande de pilotage dp du GMP (courbe c2') ou du système de freinage (courbe c3'), avec un état haut signifiant « oui » (ou « vrai ») et un état bas signifiant « non » (ou « faux »),
- la consigne de couple cc (en Nm) transmise au GMP (courbe c4') et le couple minimum autorisé (courbe c5'),
- la consigne de décélération cd (en m/s²) transmise au système de freinage (courbe c6'),
- la pression pm (en bar) du maître cylindre du système de freinage (courbe c7'),
- la consigne de décélération totale du véhicule a (en m/s²) générée (courbe c8') et la décélération effective (ou réelle) du véhicule a (en m/s²) (courbe c9').

Dans l'étape 10-50 (du procédé), on détermine la consigne de couple (destinée au GMP) c4' en fonction du couple minimal autorisé c5' et d'au moins une contrainte jusqu'à ce que ce dernier (c5') soit effectivement atteint par le GMP. De plus, on détermine la consigne de décélération c6' (destinée au calculateur de freinage C2) en fonction de cette/chaque contrainte et à partir d'un premier instant t1' choisi qui précède un second instant t2' où ce couple minimal autorisé c5' est effectivement atteint (ou entièrement exploité), de sorte que la décélération résulte de la récupération d'énergie (par le GMP) et du système de freinage SF entre ces premier t1' et second t2' instants.

En d'autres termes, avec la stratégie de l'art antérieur on décélère par freinage récupératif avec le GMP jusqu'à un instant t1, puis on déclenche la décélération par le système de freinage SF à partir de cet instant t1, alors qu'avec le procédé selon l'invention on décélère par freinage récupératif avec le GMP jusqu'à un premier instant t1', puis entre ce premier instant t1' et un second instant t2' on poursuit la décélération par freinage récupératif avec le GMP et on commence la décélération par le système de freinage SF, et à partir de ce second instant t2' on poursuit la décélération par le seul système de freinage SF.

Avec l'invention on a donc désormais trois phases au lieu de deux : une première phase avant t1' dans laquelle le freinage est purement récupératif (avec le seul GMP), une deuxième phase (mixte) dans laquelle le freinage est à la fois récupératif (avec le GMP) et hydraulique (avec le système de freinage SF), et une troisième phase dans laquelle le freinage est purement hydraulique (avec le seul système de freinage SF). La deuxième phase (mixte) permet à la fois de finir d'exploiter l'intégralité du couple minimal autorisé c5' (disponible dans le GMP) et de déclencher de façon anticipative une pré-configuration du système de freinage SF pour qu'il commence à freiner en complément du GMP, avant d'assurer seul le freinage dans la troisième phase. Cela permet très avantageusement d'éviter les discontinuités dans le freinage et/ou les bruits d'activation des pompes hydrauliques.

On notera que dans l'étape 10-50 on (le dispositif de contrôle DC) peut déterminer entre les premier t1' et second t2' instants une consigne de couple c4' (pour le GMP) qui est inférieure ou égale à chaque consigne de couple déterminée avant le premier instant t1'. Cela permet en effet de réduire progressivement la part du freinage récupératif dans le freinage total.

En présence de cette dernière option, dans l'étape 10-50 on (le dispositif de contrôle DC) peut déterminer entre les premier t1' et second t2' instants des consignes de décélération qui croissent successivement (sauf en cas d'intervention du conducteur). Cela permet d'augmenter progressivement la part du freinage hydraulique pour minimiser la discontinuité de freinage et si possible l'empêcher. Pour ce faire, les toutes premières consignes de décélération c6' qui sont transmises au calculateur de freinage C3 sont très faibles afin de déclencher une pré-configuration du système de freinage SF et de le prévenir de l'arrivée de prochaines consignes de décélération c6' plus importantes.

On notera également que dans l'étape 10-50 on (le dispositif de contrôle DC) peut choisir le premier instant t1 ' en fonction du pourcentage d'utilisation du couple du GMP par rapport au couple minimal autorisé c5'. A titre d'exemple, ce pourcentage peut être compris entre 70% et 90%.

Dans une variante de réalisation, dans l'étape 10-50 on (le dispositif de contrôle DC) peut choisir le premier instant t1' en fonction du second instant t2' (où l'intégralité du couple minimal autorisé c5' a été exploité pour le freinage récupératif). Dans ce cas, l'écart entre les premier t1' et second t2' instants est prédéfini.

On notera également que les contraintes prises en compte par le calculateur de contrôle C3 peuvent, par exemple, être choisies parmi la volonté de décélérer du conducteur (par exemple via une action sur une interface homme/machine du véhicule V), la distance en cours qui sépare le véhicule V d'un autre véhicule qui le précède, la vitesse relative en cours du véhicule V par rapport à cet autre véhicule qui le précède, la présence d'un obstacle détecté sur la portion de route sur laquelle circule le véhicule V, et la consigne de vitesse qui a été sélectionnée par le conducteur et qui définit la vitesse à laquelle il veut que le véhicule V circule.

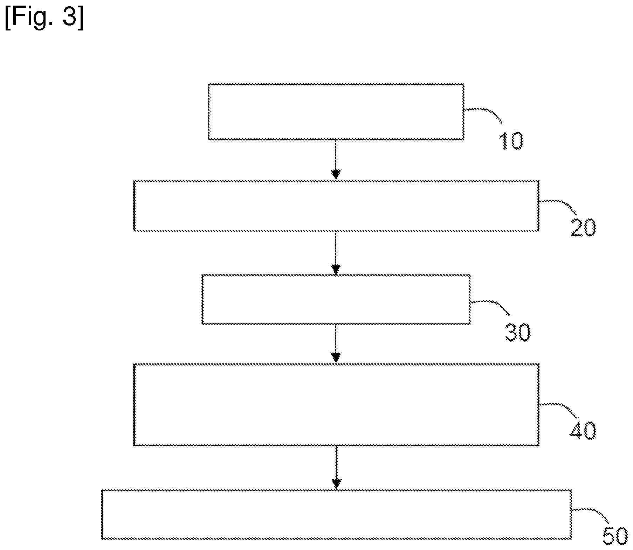

On a schématiquement représenté sur la figure 3 un exemple d'algorithme mettant en oeuvre l'étape du procédé de contrôle décrit ci-avant.

Dans une première sous-étape 10 on (le calculateur de conduite automatisée) signale au calculateur de contrôle C3 un besoin de décélération.

Dans une deuxième sous-étape 20 on (le calculateur de contrôle C3) détermine la consigne de couple c4', destinée au GMP et correspondant à ce besoin, en fonction du couple minimal autorisé c5' et d'au moins une contrainte.

Dans une troisième sous-étape 30 on (le calculateur de contrôle C3) détermine le second instant t2' où le couple minimal autorisé c5' sera atteint (ou entièrement exploité). Puis, on (le calculateur de contrôle C3) détermine le premier instant t1' en fonction de ce second instant t2'.

Dans une quatrième sous-étape 40 on (le calculateur de contrôle C3) détermine entre les premier t1' et second t2' instants des consignes de couple c4' successives (destinées au GMP) et des consignes de décélération c6' successives (destinées au calculateur de freinage C2) en fonction de chaque contrainte, de sorte que la décélération résulte de la récupération d'énergie (par le GMP) et du système de freinage SF.

Dans une cinquième sous-étape 50 on (le calculateur de contrôle C3) détermine à partir du second instant t2' seulement des consignes de décélération c6' successives (destinées au calculateur de freinage C2) en fonction de chaque contrainte, de sorte que la décélération résulte uniquement du système de freinage SF.

On notera que l'invention propose aussi un produit programme d'ordinateur comprenant un jeu d'instructions qui, lorsqu'il est exécuté par des moyens de traitement de type circuits électroniques (ou hardware), comme par exemple le calculateur de contrôle C3, est propre à mettre en oeuvre le procédé de contrôle décrit ci-avant pour contrôler la décélération du véhicule V pendant une phase de conduite automatisée (ou autonome).

On notera également que sur la figure 1 le dispositif de contrôle DC est très schématiquement illustré avec seulement son calculateur de contrôle C3. Ce dispositif de contrôle DC peut prendre la forme d'un boitier comprenant des circuits intégrés (ou imprimés), ou bien de plusieurs circuits intégrés (ou imprimés) reliés par des connections filaires ou non filaires. On entend par circuit intégré (ou imprimé) tout type de dispositif apte à effectuer au moins une opération électrique ou électronique. Comme évoqué plus haut, ce dispositif de contrôle DC peut comprendre au moins un processeur, par exemple de signal numérique (ou DSP (Digital Signal Processor)), une mémoire vive pour stocker des instructions pour la mise en oeuvre par ce processeur du procédé de contrôle tel que décrit ci-avant, et une mémoire de masse notamment pour le stockage de données obtenues (finales) et/ou d'éventuelles données intermédiaires intervenant dans les calculs. Le calculateur de contrôle C3 reçoit au moins les données définissant les contraintes, le couple minimal autorisé et les besoins de décélération pour les utiliser dans des calculs, éventuellement après les avoir mis en forme et/ou démodulés et/ou amplifiés, de façon connue en soi. Le dispositif de contrôle DC peut également comporter une interface d'entrée pour la réception d'au moins les données définissant les contraintes, le couple minimal autorisé et les besoins de décélération, et une interface de sortie pour la transmission des résultats de ses calculs, et notamment les consignes de couple et les consignes de décélération.

Une ou plusieurs sous-étapes de l'étape du procédé de contrôle peuvent être effectuées par des composants différents. Ainsi, le procédé de contrôle peut-être mis en oeuvre par une pluralité de processeurs, mémoire vive, mémoire de masse, interface d'entrée, interface de sortie et/ou processeur de signal numérique. Dans ces situations, le dispositif de contrôle DC peut-être décentralisé, au sein d'un réseau local (plusieurs processeurs reliés entre eux par exemple) ou d'un réseau étendu.

Grâce à l'invention, l'anticipation du freinage via le système de freinage permet une meilleure gestion de la répartition entre le freinage hydraulique et le freinage récupératif (ou régénératif) et une mise en place de stratégies d'agrément nécessaires au filtrage des consignes de pression (destinées aux pompes) pour réaliser le freinage hydraulique. Par ailleurs, l'exploitation de toute la plage de couple minimal autorisé permet de mieux traduire les consignes de couple (de freinage régénératif) à destination des machines non-thermiques en exploitant pour la répartition les stratégies d'optimisation énergétique internes au GMP avec des avantages sur la durée de vie des batteries.

## Revendications

1. Procédé de contrôle de décélération pour un véhicule (V) à conduite au moins partiellement automatisée et comprenant i) une machine motrice non-thermique (MN1) fournissant du couple pour au moins un train (T1) dudit véhicule (V) à partir d'une énergie stockée dans un moyen de stockage d'énergie (MS1) ou induisant une décélération dudit véhicule (V) par récupération d'énergie sur ledit train (T1) pour alimenter en énergie ledit moyen de stockage d'énergie (MS1), en fonction d'une consigne de couple, et ii) un système de freinage (SF) décélérant ledit véhicule (V) en fonction d'une consigne de décélération, **caractérisé en ce qu'**il comprend une étape (10-50) dans laquelle, en cas de besoin d'une décélération pendant une phase de conduite automatisée, on détermine ladite consigne de couple en fonction d'un couple minimal autorisé et d'au moins une contrainte jusqu'à ce que ce couple minimal autorisé soit effectivement atteint, et on détermine ladite consigne de décélération en fonction de ladite contrainte et à partir d'un premier instant (t'1) choisi précédant un second instant (t'2) où ce couple minimal autorisé est effectivement atteint, de sorte que ladite décélération résulte de ladite récupération d'énergie jusqu'au premier instant (t'1), de ladite récupération d'énergie et dudit système de freinage (SF) entre lesdits premier et second instants, et par le seul système de freinage (SF) après le second instant (t'2).

2. Procédé selon la revendication 1, **caractérisé en ce que** dans ladite étape (10-50) on détermine entre lesdits premier et second instants une consigne de couple qui est inférieure ou égale à chaque consigne de couple déterminée avant ledit premier instant.

3. Procédé selon la revendication 2, **caractérisé en ce que** dans ladite étape (10-50) on détermine entre lesdits premier et second instants des consignes de décélération qui croissent successivement.

4. Procédé selon l'une des revendications 1 à 3, **caractérisé en ce que** dans ladite étape (10-50) on choisit ledit premier instant en fonction d'un pourcentage d'utilisation du couple par rapport audit couple minimal autorisé.

5. Procédé selon l'une des revendications 1 à 3, **caractérisé en ce que** dans ladite étape (10-50) on choisit ledit premier instant en fonction dudit second instant, l'écart entre lesdits premier et second instants étant prédéfini.

6. Procédé selon l'une des revendications 1 à 5, **caractérisé en ce que** lesdites contraintes sont choisies parmi une volonté de décélérer d'un conducteur dudit véhicule (V), une distance en cours séparant ledit véhicule (V) d'un autre véhicule précédant ce dernier (V), une vitesse relative en cours dudit véhicule (V) par rapport à un autre véhicule précédant ce dernier (V), la présence d'un obstacle détecté sur une portion de route sur laquelle circule ledit véhicule (V), et une consigne de vitesse sélectionnée par ledit conducteur et définissant la vitesse à laquelle ledit conducteur veut que ledit véhicule (V) circule.

7. Produit programme d'ordinateur comprenant un jeu d'instructions qui, lorsqu'il est exécuté par des moyens de traitement, est propre à mettre en oeuvre le procédé de contrôle de décélération selon l'une des revendications précédentes pour contrôler la décélération d'un véhicule (V) à conduite au moins partiellement automatisée et comprenant i) une machine motrice non-thermique (MN1) fournissant du couple pour au moins un train (T1) dudit véhicule (V) à partir d'une énergie stockée dans un moyen de stockage d'énergie (MS1) ou induisant une décélération dudit véhicule (V) par récupération d'énergie sur ledit train (T1) pour alimenter en énergie ledit moyen de stockage d'énergie (MS1), en fonction d'une consigne de couple, et ii) un système de freinage (SF) décélérant ledit véhicule (V) en fonction d'une consigne de décélération.

8. Dispositif de contrôle (DC) pour un véhicule (V) à conduite au moins partiellement automatisée et comprenant i) une machine motrice non-thermique (MN1) fournissant du couple pour au moins un train (T1) dudit véhicule (V) à partir d'une énergie stockée dans un moyen de stockage d'énergie (MS1) ou induisant une décélération dudit véhicule (V) par récupération d'énergie sur ledit train (T1) pour alimenter en énergie ledit moyen de stockage d'énergie (MS1), en fonction d'une consigne de couple, et ii) un système de freinage (SF) décélérant ledit véhicule (V) en fonction d'une consigne de décélération, ledit dispositif (DC) comprenant au moins un calculateur (C3) déterminant lesdites consigne de couple et consigne de décélération en fonction de contraintes dans une phase de conduite automatisée, **caractérisé en ce qu'**en cas de besoin d'une décélération pendant une phase de conduite automatisée, ledit calculateur (C3) détermine ladite consigne de couple en fonction d'un couple minimal autorisé jusqu'à ce que ce couple minimal autorisé soit effectivement atteint, et détermine ladite consigne de décélération à partir d'un premier instant (t'1) choisi précédant un second instant (t'2) où ce couple minimal autorisé est effectivement atteint, de sorte que ladite décélération résulte de ladite récupération d'énergie jusqu'au premier instant (t'1), de ladite récupération d'énergie et dudit système de freinage (SF) entre lesdits premier et second instants, et par le seul système de freinage (SF) après le second instant (t'2).

9. Véhicule (V), à conduite au moins partiellement automatisée et comprenant i) une machine motrice non-thermique (MN1) fournissant du couple pour au moins un train (T1) dudit véhicule (V) à partir d'une énergie stockée dans un moyen de stockage d'énergie (MS1) ou induisant une décélération dudit véhicule (V) par récupération d'énergie sur ledit train (T1) pour alimenter en énergie ledit moyen de stockage d'énergie (MS1), en fonction d'une consigne de couple, et ii) un système de freinage (SF) décélérant ledit véhicule (V) en fonction d'une consigne de décélération, **caractérisé en ce qu'**il comprend en outre un dispositif de contrôle (DC) selon la revendication 8.

10. Véhicule selon la revendication 9, **caractérisé en ce qu'**il est de type automobile.

## Patentansprüche

1. Verfahren zur Verzögerungssteuerung für ein Fahrzeug (V) mit zumindest teilweise automatisiertem Fahren und umfassend i) eine nicht-thermische Antriebsmaschine (MN1), die aus gespeicherter Energie Drehmoment für mindestens einen Zug (T1) des Fahrzeugs (V) bereitstellt in einem Energiespeichermittel (MS1) oder Hervorrufen einer Verzögerung des Fahrzeugs (V) durch Energierückgewinnung auf dem Zug (T1), um dem Energiespeichermittel (MS1) Energie zuzuführen, als Funktion eines Drehmomentsollwerts, und ii) ein Bremssystem (SF), das das Fahrzeug (V) in Abhängigkeit von einem Verzögerungssollwert abbremst, **dadurch gekennzeichnet, dass** es einen Schritt (10-50) umfasst, in dem im Falle eines Verzögerungsbedarfs während einer automatisierten Fahrphase das besagte Der Drehmomentsollwert wird in Abhängigkeit von einem zulässigen Mindestdrehmoment und mindestens einer Einschränkung bestimmt, bis dieses zulässige Mindestdrehmoment tatsächlich erreicht wird, und der Verzögerungssollwert wird in Abhängigkeit von dieser Einschränkung und ausgehend von einem vorher gewählten ersten Zeitpunkt (t'1) bestimmt einen zweiten Zeitpunkt (t'2), in dem dieses zulässige Mindestdrehmoment tatsächlich erreicht wird, so dass die Verzögerung aus der Energierückgewinnung bis zum ersten Zeitpunkt (t'1), aus der Energierückgewinnung und aus dem dazwischen liegenden Bremssystem (SF) resultiert besagten ersten und zweiten Zeitpunkt und nach dem zweiten Zeitpunkt (t'2) allein durch das Bremssystem (SF).

2. Verfahren nach Anspruch 1, **dadurch gekennzeichnet, dass** im Schritt (10-50) zwischen dem ersten und dem zweiten Zeitpunkt ein Drehmomentsollwert ermittelt wird, der kleiner oder gleich jedem vor dem ersten Zeitpunkt ermittelten Drehmomentsollwert ist.

3. Verfahren nach Anspruch 2, **dadurch gekennzeichnet, dass** im Schritt (10-50) Verzögerungsanweisungen zwischen dem ersten und dem zweiten Zeitpunkt ermittelt werden, die sukzessive ansteigen.

4. Verfahren nach einem der Ansprüche 1 bis 3, **dadurch gekennzeichnet, dass** im Schritt (10-50) der erste Zeitpunkt als Funktion eines Prozentsatzes der Drehmomentnutzung im Verhältnis zum zulässigen Mindestdrehmoment gewählt wird.

5. Verfahren nach einem der Ansprüche 1 bis 3, **dadurch gekennzeichnet, dass** im Schritt (10-50) der erste Zeitpunkt als Funktion des zweiten Zeitpunkts gewählt wird, wobei die Differenz zwischen dem ersten und dem zweiten Zeitpunkt vordefiniert wird.

6. Verfahren nach einem der Ansprüche 1 bis 5, **dadurch gekennzeichnet, dass** die genannten Einschränkungen ausgewählt werden aus einem Wunsch, einen Fahrer des genannten Fahrzeugs (V) zu verlangsamen, einem aktuellen Abstand, der das genannte Fahrzeug (V) von einem anderen davorfahrenden Fahrzeug trennt ( V), eine aktuelle Relativgeschwindigkeit des Fahrzeugs (V) im Verhältnis zu einem anderen davorfahrenden Fahrzeug (V), das Vorhandensein eines Hindernisses, das auf einem Abschnitt der Straße, auf der das Fahrzeug (V) fährt, erkannt wurde) und a Vom Fahrer gewählter Geschwindigkeitssollwert, der die Geschwindigkeit definiert, mit der der Fahrer das Fahrzeug (V) fahren lassen möchte.

7. Computerprogrammprodukt, umfassend einen Befehlssatz, der bei Ausführung durch Verarbeitungsmittel in der Lage ist, das Verzögerungssteuerverfahren nach einem der vorhergehenden Ansprüche umzusetzen, um die Verzögerung eines Fahrzeugs (V) bei zumindest teilweise automatisiertem Fahren zu steuern und umfassend i) eine nicht-thermische Antriebsmaschine (MN1), die Drehmoment für mindestens einen Zug (T1) des Fahrzeugs (V) aus in einem Energiespeichermittel (MS1) gespeicherter Energie bereitstellt oder eine Verzögerung des Fahrzeugs (V) induziert, durch Energierückgewinnung auf dem Zug (T1), um dem Energiespeichermittel (MS1) gemäß einem Drehmomentsollwert Energie zuzuführen, und ii) ein Bremssystem (SF), das das Fahrzeug (V) gemäß einem Verzögerungssollwert verlangsamt.

8. Steuervorrichtung (DC) für ein Fahrzeug (V) mit zumindest teilweise automatisiertem Fahren und umfassend i) eine nicht-thermische Motormaschine (MN1), die Drehmoment für mindestens einen Strang (T1) des Fahrzeugs (V) zu einem Teil bereitstellt des Energieeintrags in einen maximalen Energieeintrag (MS1) oder Induzieren einer Verzögerung des Fahrzeugs (V) zur Energierückgewinnung im Zug (T1) zur Bereitstellung des maximalen Energieeintrags (MS1) und Funktion eines Drehmomentsollwerts, und ii ) ein Bremssystem (SF), das das Fahrzeug (V) in Abhängigkeit von einem Verzögerungssollwert abbremst, wobei die Vorrichtung (DC) mindestens einen Computer (C3) umfasst, der den genannten Drehmomentsollwert und Verzögerungssollwert in Abhängigkeit von Randbedingungen in einem automatisierten System bestimmt Fahrphase, **dadurch gekennzeichnet, dass** bei einem Beschleunigungsbedarf während einer automatisierten Fahrphase die Berechnung (C3) den Drehmomentsollwert in Abhängigkeit von einem minimal zulässigen Drehmoment ermittelt, bis dieses minimal zulässige Drehmoment tatsächlich erreicht wird, und die Sollverzögerung ermittelt Sollwert ab einem ersten Zeitpunkt (t'1), der vor einem zweiten Zeitpunkt (t'2) gewählt wird, in dem diese Drehmoment-Mindestautorisierung wirksam wird, der Typ, bei dem die Verzögerung aufgrund der Energierückgewinnung bis zum ersten Zeitpunkt (t'1) beginnt besagte Energierückgewinnung und von besagtem Bremssystem (SF) zwischen besagtem ersten und zweiten Zeitpunkt und durch das Bremssystem (SF) allein nach dem zweiten Zeitpunkt (t'2).

9. Fahrzeug (V) mit zumindest teilweise automatisiertem Fahren und umfassend i) eine nicht-thermische Motormaschine (MN1), die Drehmoment für mindestens einen Zug (T1) des Fahrzeugs (V) aus in einer Stromversorgung gespeicherter Energie bereitstellt ( MS1) oder Anzeige einer Verzögerung des Fahrzeugs (V) zur Energierückgewinnung im Zug (T1) zur Versorgung der Energieversorgung (MS1), in gleicher Drehmomentsollwertfunktion, und ii) ein Bremssystem (SF), das das Fahrzeug abbremst (V) in Abhängigkeit von einem Verzögerungssollwert, **dadurch gekennzeichnet, dass** es weiterhin eine Steuereinrichtung (DC) nach Anspruch 8 umfasst.

10. Fahrzeug nach Anspruch 9, **dadurch gekennzeichnet, dass** es vom Automobiltyp ist.

## Claims

1. Deceleration control method for a vehicle (V) with at least partially automated driving and comprising i) a non-thermal driving machine (MN1) providing torque for at least one train (T1) of said vehicle (V) from of energy stored in an energy storage means (MS1) or inducing a deceleration of said vehicle (V) by energy recovery on said train (T1) to supply energy to said energy storage means (MS1) , as a function of a torque setpoint, and ii) a braking system (SF) decelerating said vehicle (V) as a function of a deceleration setpoint, **characterized in that** it comprises a step (10-50) in which, in the event of a need for deceleration during an automated driving phase, said torque setpoint is determined as a function of a minimum authorized torque and at least one constraint until this minimum authorized torque is actually reached , and said deceleration setpoint is determined as a function of said constraint and from a first instant (t'1) chosen preceding a second instant (t'2) where this minimum authorized torque is actually reached, so that said deceleration results from said energy recovery up to the first instant (t'1), from said energy recovery and from said braking system (SF) between said first and second instants, and by the braking system (SF) alone after the second moment (t'2).

2. Method according to claim 1, **characterized in that** in said step (10-50) a torque setpoint is determined between said first and second instants which is less than or equal to each torque setpoint determined before said first instant.

3. Method according to claim 2, **characterized in that** in said step (10-50) deceleration instructions are determined between said first and second instants which increase successively.

4. Method according to one of claims 1 to 3, **characterized in that** in said step (10-50) said first instant is chosen as a function of a percentage of use of the torque in relation to said minimum authorized torque.

5. Method according to one of claims 1 to 3, **characterized in that** in said step (10-50) said first instant is chosen as a function of said second instant, the difference between said first and second instants being predefined.

6. Method according to one of claims 1 to 5, **characterized in that** said constraints are chosen from a desire to decelerate of a driver of said vehicle (V), a current distance separating said vehicle (V) from another vehicle preceding the latter (V), a current relative speed of said vehicle (V) in relation to another vehicle preceding the latter (V), the presence of an obstacle detected on a portion of the road on which said vehicle (V) is traveling ), and a speed setpoint selected by said driver and defining the speed at which said driver wants said vehicle (V) to travel.

7. Computer program product comprising a set of instructions which, when executed by processing means, is capable of implementing the deceleration control method according to one of the preceding claims to control the deceleration of 'a vehicle (V) with at least partially automated driving and comprising i) a non-thermal driving machine (MN1) providing torque for at least one train (T1) of said vehicle (V) from energy stored in a energy storage means (MS1) or inducing a deceleration of said vehicle (V) by energy recovery on said train (T1) to supply energy to said energy storage means (MS1), according to a setpoint of torque, and ii) a braking system (SF) decelerating said vehicle (V) according to a deceleration setpoint.

8. Control device (DC) for a vehicle (V) with at least partially automated driving and comprising i) a non-thermal driving machine (MN1) providing torque for at least one train (T1) of said vehicle (V) to from energy stored in an energy storage means (MS1) or inducing a deceleration of said vehicle (V) by energy recovery on said train (T1) to supply energy to said energy storage means (MS1 ), as a function of a torque setpoint, and ii) a braking system (SF) decelerating said vehicle (V) as a function of a deceleration setpoint, said device (DC) comprising at least one calculator (C3) determining said torque setpoint and deceleration setpoint as a function of constraints in an automated driving phase, **characterized in that** in the event of a need for deceleration during an automated driving phase, said computer (C3) determines said torque setpoint in function of a minimum authorized torque until this minimum authorized torque is actually reached, and determines said deceleration setpoint from a first instant (t'1) chosen preceding a second instant (t'2) where this minimum authorized torque is effectively reached, so that said deceleration results from said energy recovery up to the first instant (t'1), from said energy recovery and from said braking system (SF) between said first and second instants , and by the braking system alone (SF) after the second instant (t'2).

9. Vehicle (V), with at least partially automated driving and comprising i) a non-thermal driving machine (MN1) providing torque for at least one train (T1) of said vehicle (V) from energy stored in an energy storage means (MS1) or inducing a deceleration of said vehicle (V) by energy recovery on said train (T1) to supply energy to said energy storage means (MS1), according to a torque setpoint, and ii) a braking system (SF) decelerating said vehicle (V) as a function of a deceleration setpoint, **characterized in that** it further comprises a control device (DC) according to claim 8.

10. Vehicle according to claim 9, **characterized in that** it is of the automobile type.
